(19) Europäisches Patentamt
European Patent Office
Office européen des brevets

(11) **EP 2 469 070 B1**

(12) **EUROPÄISCHE PATENTSCHRIFT**

(45) Veröffentlichungstag und Bekanntmachung des Hinweises auf die Patenterteilung:
**19.02.2014 Patentblatt 2014/08**

(51) Int Cl.:
*F02N 11/10* *(2006.01)* *F02N 11/08* *(2006.01)*
*B60R 16/033* *(2006.01)* *H02J 7/14* *(2006.01)*

(21) Anmeldenummer: **10015907.8**

(22) Anmeldetag: **21.12.2010**

(54) **Begrenzung des Startspannungseinbruchs in einem Kraftfahrzeug-Bordnetz**

Limitation of the drop in starting voltage in the electrical system of a motor vehicle

Limitation de l'introduction de la tension de démarrage dans un réseau de bord de véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.06.2012 Patentblatt 2012/26**

(73) Patentinhaber: **Eberspächer Controls GmbH & Co. KG**
**76863 Herxheim (DE)**

(72) Erfinder:
• **Wandres, Steffen**
**76870 Kandel (DE)**
• **Sebastian, Heinz**
**76889 Kapellen-Drusweiler (DE)**
• **Carsten, Binder**
**77836 Rheinmünster (DE)**

(74) Vertreter: **Grünecker, Kinkeldey,**
**Stockmair & Schwanhäusser**
**Leopoldstrasse 4**
**80802 München (DE)**

(56) Entgegenhaltungen:
DE-A1-102008 040 724    DE-A1-102009 010 977
US-A1- 2010 090 526

**Beschreibung**

Die vorliegende Erfindung betrifft ein verbessertes Kraftfahrzeug-Bordnetz. Insbesondere betrifft die Erfindung ein neuartiges Kraftfahrzeug-Bordnetz, mit welchem ein Abschalten von Geräten während des Startvorgangs wegen zu niedriger Versorgungsspannung verhindert wird.

Ein Kraftfahrzeug-Bordnetz versorgt eine Vielzahl von Steuergeräten und Signalkomponenten in einem Kraftfahrzeug mit Strom. Der Strom wird entweder einer Batterie als Energiespeicher oder, beim Betrieb des Kraftfahrzeugmotors, einem Generator (Lichtmaschine) entnommen. Über Relais oder einen elektronischen Stromverteiler mit Halbleiterschaltern kann eine Vielzahl einzelner Anwendungen (elektrische Fahrzeugkomponenten) über individuelle Laststromkreise mit Strom aus dem Kraftfahrzeug-Bordnetz versorgt werden.

Herkömmliche Bordnetze mit einer Spannung von 14 V (Volt) basieren auf einer Batteriespannung von 12 V. Zukünftige Bordnetze sind mit einer 36 V-Batterie ausgestattet. Für eine Übergangszeit, in der eine Umstellung von einem 14 V auf ein 42 V-System stattfindet, werden beide Systeme parallel in einem Kraftfahrzeug eingesetzt.

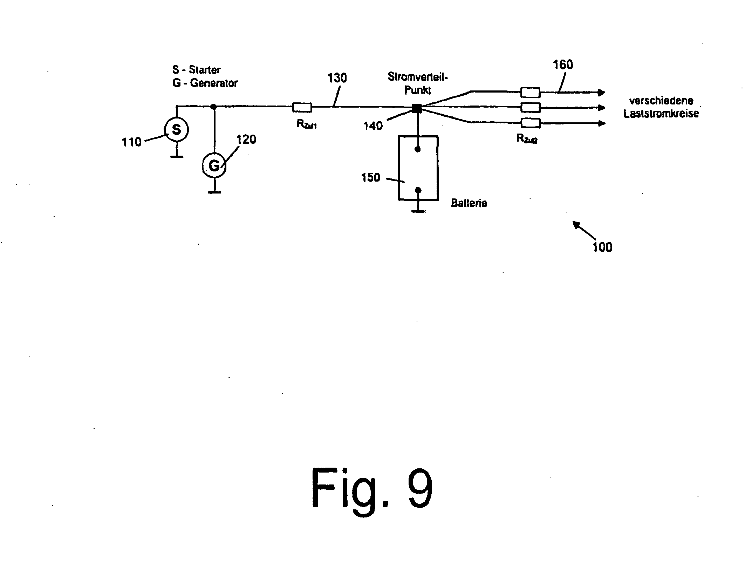

Eine schematische Darstellung eines konventionell aufgebauten Kraftfahrzeug-Bordnetzes ist in Fig. 9 dargestellt. In dem abgebildeten Bordnetz 100 sind ein Generator 120, eine Batterie 150 und ein Starter 110 parallel geschaltet. Im Allgemeinen beträgt die Leitungslänge 130 zwischen dem Generator 120 und dem Starter 110 einerseits und der Batterie 150 jeweils etwa 1 m. Dabei sind Starter und Generator am Motorblock angeordnet und jeweils über ein kurzes Kabel miteinander verbunden. Aufgrund von Schwankungen des vom Generator bereitgestellten Stroms und zur Übertragung des Starterstroms beträgt der Leitungsquerschnitt in etwa 25 mm$^2$.

Über einen Stromverteiler (Stromverteilpunkt 140) wird der Strom verschiedenen Laststromkreisen 160 im Bordnetz des Kraftfahrzeugs zugeführt. Jeder Laststromkreis 160 versorgt einen oder mehrere Verbraucher mit Strom. Bei einer Leitungslänge eines Laststromkreises von etwa 1 m können diese Leitungen einen geringeren Querschnitt als die Leitung 130 aufweisen, und zwar von ca. 5 mm$^2$.

Während der Starter 110 eine sehr hohe Stromaufnahme von bis zu 300 A (Ampere), kurzzeitig sogar bis zu 600 A aufweist, ist die Stromaufnahme anderer Verbraucher im Kraftfahrzeug-Bordnetz deutlich geringer. Typische Stromwerte von Verbrauchern im Kraftfahrzeug-Bordnetz, wie Beleuchtungskomponenten, Scheibenwischer und Innenraumgebläse einer Klimaanlage liegen im Bereich von einigen Ampere bis zu ca. 10 A. Eine Sitzheizung und eine Motorsteuerung mit Kraftstoffpumpe benötigen ca. 20 A, und ein elektrischer PTC-Zuheizer hat maximal eine Stromaufnahme im Bereich von etwa 100 A. Komponenten mit einer ähnlich hohen Stromaufnahme wie ein Starter sind zum Beispiel Pneumatikpumpen und Motoren für eine Lenkunterstützung (Servolenkung).

Aufgrund der vergleichsweise hohen Stromaufnahme des Starters und weiterer, zum Beispiel der vorstehend genannten, Komponenten, bricht die Batteriespannung beim Startvorgang des Kraftfahrzeugmotors beziehungsweise beim Betrieb weiterer stromintensiver Komponenten im Allgemeinen stark ein. Moderne elektronische Geräte im Kraftfahrzeug, wie z.B. Radios und Navigationsgeräte sind gegenüber einem Einbruch der Versorgungsspannung sehr empfindlich. Wenn solche elektrischen Geräte vom Bordnetz nicht mehr mit einer ausreichend hohen Spannung versorgt werden, führt dies zum Abschalten der Geräte. Der Spannungseinbruch im Bordnetz kann folglich zum Abschalten elektrischer Geräte im Kraftfahrzeug während des Startvorgangs führen.

Man hat versucht, den beschriebenen Auswirkungen des Spannungseinbruchs durch die Verwendung von Energiespeichern wie z.B. Doppelschichtkondensatoren und DC/DC-Wandlern zum Überbrücken des Startspannungseinbruchs zu begegnen. Damit lassen sich Spannungseinbrüche für Teile des Bordnetzes vermeiden. Derartige Gegenmaßnahmen sind z.B. aus der Druckschrift EP 1 564 862 A1 bekannt.

Es ist ein Nachteil derartiger bekannter Gegenmaßnahmen, dass sie einen recht hohen Aufwand erfordern, und außerdem Spannungseinbrüche lediglich für Teile des Bordnetzes kompensiert werden können, der eigentliche Spannungseinbruch durch den Starter jedoch nicht verhindert werden kann.

Das generelle Erfordernis, die Belastung der Starterbatterie möglichst klein zu halten, hat in modernen Kraftfahrzeugen eine besondere Bedeutung erlangt, da diese mit einer Start/Stopp-Funktion ausgestattet sind. Mit der Start/Stopp-Funktion kann der Motor an jeder Ampel abgestellt werden, während elektrische Verbraucher wie elektronische Zusatzgeräte, Radio etc. weiterlaufen. Es ist jedoch nicht akzeptabel, dass Zusatzgeräte wie Radio oder Navigationsgerät beim erneuten Starten des Motors (z.B. durch Betätigen der Kupplung) ausfallen. Heutige Zusatzgeräte im Kraftfahrzeug, wie Autoradio oder Navigationsgerät sind zwar so ausgelegt, dass sie bestimmte Spannungseinbrüche kompensieren können (z.B. durch den Einsatz von Spannungswandlern). Dennoch können derartige Maßnahmen einen Spannungsabfall nicht beliebig kompensieren, so dass unterhalb einer bestimmten Untergrenze für die Spannung an der Starterbatterie die elektronischen Zusatzgeräte abschalten. Eine solche Untergrenze für die Spannung an der Starterbatterie kann z.B. ca. 7 V betragen.

Es ist deshalb wünschenswert, dass beim Startvorgang eine bestimmte Untergrenze der Batteriespannung durch den Spannungsabfall zunächst nicht unterschritten wird.

Dies kann dadurch erreicht werden, dass im Kraftfahrzeug-Bordnetz eine Einrichtung zum Begrenzen des Stroms zum Starter vorgesehen ist, so dass der Spannungseinbruch der Batterie beim Startvorgang begrenzt wird.

Zum Beispiel kann der Strom zum Starter mit Hilfe eines Vorschaltgeräts begrenzt werden, welches den Stromfluss zum Starter mit einem bestimmten Tastverhältnis innerhalb eines vorgegebenen Taktrahmens unterbricht und freigibt. Ein solches Ansteuerungskonzept wird als Pulsbreitenmodulation (pulse width modulation - PWM) bezeichnet.

Durch das Ansteuern des Starters mit PWM werden Induktionsspannungen induziert. Um die Auswirkungen der Induktionsspannungen zu reduzieren, wird eine Freilaufdiode verwendet, die vom Vorschaltgerät parallel zum Starter gegen Masse geschaltet wird.. Zu diesem Zweck wird das Vorschaltgerät neben den Hochstromanschlüssen für Batterie und Starter außerdem mit einem weiteren Hochstromanschluss für Masse versehen.

Vorzugsweise wird das Tastverhältnis vom Beginn des Startvorgangs an erhöht. Dabei ist das Tastverhältnis zu Beginn des Startvorgangs fest vorgegeben, und erhöht sich im Laufe des Startvorgangs allmählich, um den Startprozess zu unterstützen. Weiter vorzugsweise erfolgt die Erhöhung des Tastverhältnisses quasikontinuierlich, d.h. in kleinen Schritten, die jeweils klein gegenüber dem aktuell eingestellten Tastverhältnis sind. Die Erhöhung kann bis zu einem vorgegebenen maximalen Tastverhältnis erfolgen. Falls die Erhöhung bis zu einem maximalen Tastverhältnis von 100 % (dauerhafter Speisung des Starters mit der Batteriespannung) erfolgt, so entspricht die Zeitdauer vom Beginn des Startvorgangs bis zum Erreichen eines Tastverhältnisses von 100 % einer Zeitdauer, während der der Strom zum Starter begrenzt wird. Nach Ablauf der Zeitdauer wird wie oben beschrieben dauerhaft der volle Strom dem Starter zugeführt, bis der Startvorgang beendet ist (entspricht einem "Tastverhältnis" von 100 %). Alternativ kann auch ein vordefiniertes festes Tastverhältnis vom Beginn des Startvorgangs für eine bestimmte Zeitdauer angewandt werden, und nach Ablauf der Zeitdauer in einem einzigen Schritt von PWM auf Dauerstrom umgeschaltet werden.

Ein Nachteil einer Strombegrenzung mit PWM ist der relativ komplizierte Aufbau, bedingt durch die Induktionsspannungen, verursacht durch die häufigen Schaltvorgänge. Um deren Einfluss zu kompensieren ist eine Freilaufdiode erforderlich, welche wiederum einen weiteren Hochstromanschluss für Masse am PWM-Vorschaltgerät bedingt.

Der Strom zum Starter wird deshalb alternativ durch einen Leistungswiderstand, der als Vorwiderstand zu dem Starter geschaltet ist, begrenzt. Weiterhin ist in diesem Falle ein Schalter, der parallel zu dem Vorwiderstand geschaltet ist, vorgesehen, so dass der Vorwiderstand überbrückt werden kann. Ein eingeschalteter Schalter (überbrückter Vorwiderstand) entspricht einem Startvorgang ohne Strombegrenzung. Bei der Strombegrenzung durch einen Vorwiderstand sind gegenüber der Strombegrenzung durch PWM weniger Schaltvorgänge erforderlich. Außerdem bleibt immer eine Grundlast durch den Widerstand erhalten, und es treten kleinere Induktionsspannungen auf. Somit kann auf eine Freilaufdiode und auf einen Hochstromanschluss für Masse an einem Vorschaltgerät verzichtet werden. Diese Ausführungsform hat somit gegenüber der Ausführungsform mit PWM den Vorteil eines einfacheren Aufbaus. Der Schalter ist vorzugsweise ein Halbleiterschalter.

Da es durch die Strombegrenzung zur Verlängerung des Startvorgangs kommt, muss ein Optimum zwischen Startdauer und Startspannungseinbruch gefunden werden. Mit anderen Worten, ist es wünschenswert, ein Optimum zwischen einem sicheren und möglichst schnellen Motorstart und dem Schutz von Komponenten der Bordelektronik wie Navigationsgeräten vor Unterspannung zu erzielen.

DE 102009010977 offenbart einen Kraftfahrzeug-Bordnetz umfassend einer Batterie und einen elektrischen Verbraucher, einen als Vorwiderstand zu dem Verbraucher geschalteten Leistungswiderstand zum Begrenzen des Verbraucherstroms, und einen Schalter zum Überbrücken des Vorwiderstands.

Es ist Aufgabe der vorliegenden Erfindung, ein verbessertes Kraftfahrzeug-Bordnetz und ein Verfahren zum Steuern der Batteriespannung In einem Kraftfahrzeug-Bordnetz anzugeben, womit ein optimaler Ausgleich zwischen einer Reduktion des Spannungseinbruchs beim Betrieb von Verbrauchern mit hoher Stromaufnahme, insbesondere beim Startvorgang, und der Funktionsfähigkeit der starken Stromverbraucher sichergestellt wird.

Diese Aufgabe wird mit den Merkmalen der unabhängigen Patentansprüche gelöst.

Es ist der besondere Ansatz der vorliegenden Erfindung, eine Strombegrenzung zu einem starken Stromverbraucher im Kraftfahrzeug-Bordnetz, insbesondere einem Starter (Anlasser) für den Kraftfahrzeugmotor, mit einem überbrückbaren Vorwiderstand in Abhängigkeit vom aktuellen Batteriezustand zu optimieren. Hierzu wird ein optimaler Zeitpunkt für eine Beendigung der Strombegrenzung in einem adaptiven Verfahren ermittelt. Dadurch wird einerseits ein starker Batteriespannungseinbruch durch den Verbraucher, insbesondere beim Motorstartvorgang, verhindert, und spannungsempfindliche Komponenten des Bordnetzes werden so geschützt. Andererseits wird eine sichere Funktion der starken Stromverbraucher, insbesondere ein sicherer Motorstart, gewährleistet. Da hierbei nur ein zusätzlicher Schaltvorgang erfolgt (Einschalten des Schalters zum Überbrücken des Vorwiderstands), entstehen quasi keinerlei EMV-Störungen.

Der aktuelle Zustand der Batterie wird vorzugsweise in Abhängigkeit von einem oder mehreren Betriebsparametern des Bordnetzes beurteilt. Solche Betriebsparameter sind insbesondere die Batteriespannung selbst und am Verbraucher gemessene Spannungen, oder Stromstärken wie zum Beispiel ein Starterstrom. Weiterhin können Widerstandswerte im Bordnetz eine Rolle spielen. Diese können auch indirekt über eine Messung und Auswertung anderer Betriebsparameter zugänglich sein.

Weiter vorzugsweise wird der Vorwiderstand in Abhängigkeit von einer mit einer entsprechenden Einrichtung gemessenen Batteriespannung überbrückt. Die aktuelle Batteriespannung beim Betrieb eines stromintensiven Verbrauchers wie des Anlassers ist in jedem Falle ein Betriebsparameter, der auf den aktuellen Zustand der Batterie schließen lässt.

Weiter vorzugsweise steuert die Steuereinheit den Schalter dann zum Überbrücken des Vorwiderstands an, wenn die gemessene Batteriespannung über einem Sollwert liegt. Auf diese Weise wird erreicht, dass eine Begrenzung des Startstroms, und somit Verlängerung des Startvorgangs nur dann erfolgt, wenn aufgrund einer ohnehin niedrigen Batteriespannung ein für die Verbraucher schädliches weiteres Absinken zu befürchten wäre. Gemäß einer weiteren bevorzugten Ausführungsform wird die Batteriespannung zyklisch mit einer vorgegebenen Frequenz gemessen. Der Schalter zum Überbrücken des Vorwiderstands wird in Abhängigkeit von der gemessenen Batteriespannung eingeschaltet, sobald die gemessene Spannung größer ist als der Sollwert und bleibt anschließend eingeschaltet. Alternativ kann die zyklische Messung der Batteriespannung fortgesetzt werden, und der Schalter wird aus- beziehungsweise eingeschaltet, je nachdem ob die gemessene Batteriespannung kleiner beziehungsweise größer als der Sollwert ist. Allerdings sind aufgrund der höheren Zahl von Schaltvorgängen hierbei größere EMV-Störungen zu erwarten.

Gemäß der vorliegenden Erfindung wertet die Steuereinheit Betriebsparameter des Kraftfahrzeug-Bordnetzes bei nicht überbrücktem Vorwiderstand aus, um einen zu erwartenden Wert der Batteriespannung beim Überbrücken des Vorwiderstands zu bestimmen. Es wird durch die Auswertung also vorhergesagt, wir stark die Batteriespannung einbrechen würde, wenn der Schalter zum jeweiligen Zeitpunkt zum Überbrücken des Vorwiderstands eingeschaltet würde. Der Schalter wird dann von der Steuereinheit in Abhängigkeit von dem durch die Auswertung bestimmten zu erwartenden Wert der Batteriespannung zum Überbrücken des Vorwiderstands angesteuert. Vorzugsweise erfolgt die Auswertung und Bestimmung des zu erwartenden Werts zyklisch mit einer vorgegebenen Frequenz. Weiter vorzugsweise wird der Vorwiderstand dann überbrückt, wenn der zu erwartende Wert über einem bestimmten Sollwert liegt. Weiter vorzugsweise bleibt die Überbrückung des Vorwiderstands anschließend bestehen, so dass nur ein einziger Schaltvorgang erforderlich ist.

Vorzugsweise erfolgt die Bestimmung des zu erwartenden Werts für die Batteriespannung beim Überbrücken des Vorwiderstands durch Messen und Auswerten der Batteriespannung und der Spannung am Verbraucher. Mit Hilfe einer Messung und mathematischen Auswertung dieser Parameter durch die Steuereinheit kann zu jedem Messzeitpunkt bestimmt werden, wie hoch die Batteriespannung unmittelbar nach dem Schließen des Schalters zu diesem Zeitpunkt wäre. Die Messung der Batteriespannung und der Spannung am Verbraucher erfolgt vorzugsweise zyklisch mit einer vorgegebenen Frequenz.

Bevorzugte Beispiele für Verbraucher mit hoher Stromaufnahme, die zu einem unerwünscht hohen Batteriespannungseinbruch führen kann, der durch Begrenzung der Stromaufnahme gemäß der vorliegenden Erfindung verhindert wird, sind ein Starter (Anlasser) für das Starten eines Kraftfahrzeugmotors, ein Antrieb für eine Pneumatikpumpe und ein Motor für eine Lenkunterstützung (Servolenkung).

Vorzugsweise wird eine Zeit ab dem Einschalten des Verbrauchers mit einem Timer gemessen. Nach Ablauf einer vorbestimmten Zeit, gerechnet ab dem Einschalten, wird der Vorwiderstand selbst dann überbrückt, wenn ein Einbruch der Batteriespannung bis unterhalb des Schwellwerts (Sollwerts) zu erwarten ist. Wenn im Beispiel des Starters der Motor nach Ablauf dieser Zeitdauer noch nicht gestartet ist, wird die Strombegrenzung in jedem Fall aufgehoben, um ein sicheres Starten des Motors zu gewährleisten. In diesem Fall werden ein höherer Spannungsabfall an der Batterie und ein dadurch bedingtes möglichen Abschalten von Zusatzgeräten in Kauf genommen.

Weitere vorteilhafte Ausgestaltungen sind Gegenstand der Unteransprüche.

Im Folgenden wird die vorliegende Erfindung anhand bevorzugter Ausführungsformen im Zusammenhang mit den beiliegenden Zeichnungen erläutert, in denen:

Fig. 1 ein allgemeines Schema eines Kraftfahrzeug-Bordnetzes gemäß der vorliegenden Erfindung darstellt;

Fig. 2 ein Beispiel eines Kraftfahrzeug-Bordnetzes mit einem Vorschaltgerät zur Ansteuerung des Starters über PWM darstellt;

Fig. 3 ein Diagramm mit einer Darstellung eines Tastverhältnisses bei einer PWM mit einer vorgegebenen Frequenz darstellt, wobei sich das Tastverhältnis mit der Zeit kontinuierlich vergrö-βert;

Fig. 4 eine schematische Darstellung eines Kraftfahrzeug-Bordnetzes mit einem Vorschaltgerät zum Starter unter Verwendung eines Vorwiderstands gemäß einer Ausführungsform der vorliegenden Erfindung ist;

Fig. 5 ein Ersatzschaltbild für eine Serienschaltung von Batterie, Starter und überbrückbarem Vorwiderstand gemäß einer Ausführungsform der vorliegenden Erfindung darstellt;

Fig. 6 ein Flussdiagramm für ein Verfahren darstellt, bei dem eine Begrenzung der Stromaufnahme des Starters zeitlich beschränkt erfolgt;

Fig. 7 ein Flussdiagramm eines Verfahrens gemäß einer Ausführungsform der vorliegenden Erfindung darstellt, bei dem die Begrenzung der Stromaufnahme des Starters nur so lange erfolgt, bis die gemessene Batteriespannung einen vorbestimmten Sollwert nicht überschreitet;

Fig. 8 ein Flussdiagramm eines Verfahrens gemäß einer Ausführungsform der vorliegenden Erfindung darstellt, bei der die Begrenzung der Stromaufnahme des Starters adaptiv in Abhängigkeit von einer vorhergesagten Batteriespannung durch Auswertung von Betriebsparametern des Kraftfahrzeug-Bordnetzes erfolgt; und

Fig. 9 eine schematische Darstellung eines herkömmlichen Kraftfahrzeug-Bordnetzes ist.

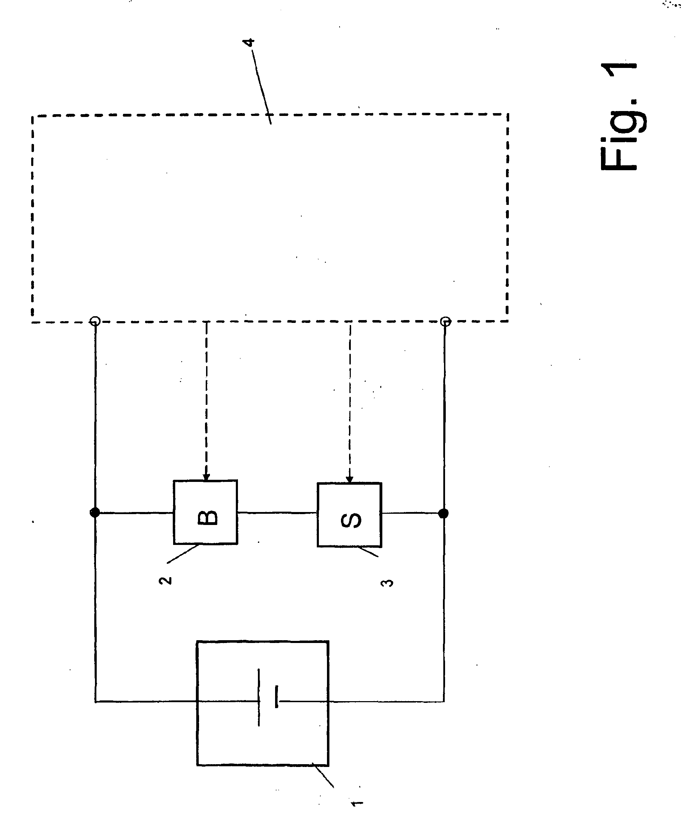

Der vorliegenden Erfindung liegt die Idee zugrunde, den Strom zum Starter während des Startvorgangs insoweit zu begrenzen, dass der Startvorgang nur unwesentliche Spannungseinbrüche an der Batterie zur Folge hat. Dadurch lässt sich der Spannungseinbruch der Batterie und somit des gesamten Bordnetzes vermeiden. Diese Grundidee ist in stark vereinfachter schematischer Form in Fig. 1 dargestellt. Wie darin gezeigt, ist in dem Stromweg zwischen Batterie 1 und Starter (Anlasser) 3 zusätzlich eine Einrichtung 2 zum Begrenzen des dem Starter zugeführten Stroms vorgesehen. Alle weiteren Komponenten des Kraftfahrzeug-Bordnetzes, einschließlich eines Generators (Lichtmaschine) zum Laden der Batterie sind in dem Kasten "black box" 4 auf der rechten Seite auf der schematischen Darstellung von Fig. 1 enthalten. Hierzu gehören auch Steuerkomponenten, welche einer Ansteuerung des Starters 3 bzw. der Strombegrenzungseinrichtung 2 dienen (im Schema durch gestrichelte Pfeile dargestellt). Das Kraftfahrzeug-Bordnetz ("black box" 4) umfasst weitere Komponenten wie Heizung oder Klimaanlage, Unterhaltungselektronik, Navigationssystem, Beleuchtung, Servomotoren, zum Beispiel für Fensterheber oder Pneumatikkomponenten oder zur Lenkunterstützung etc. Dem Fachmann ist eine Vielzahl weiterer elektrischer Fahrzeugkomponenten bekannt.

Zum besseren Verständnis und aus Gründen der Anschaulichkeit wird im folgenden eine detaillierte Beschreibung der Erfindung zugrunde liegender Konzepte sowie einzelner Ausführungsformen der Erfindung und weiterer beispielhafter Einrichtungen und Verfahren zur Begrenzung des Batteriespannungseinbruchs exemplarisch anhand des Starters und des Motorstartvorgangs erläutert. Wie bereits ausgeführt ist die Erfindung jedoch nicht auf diese Anwendung beschränkt. Vielmehr ist die Erfindung auf eine Steuerung der Batteriespannung im Kraftfahrzeug-bordnetz zur Verhinderung eines Spannungseinbruchs, verursacht durch jeden Verbraucher mit hoher Stromaufnahme anwendbar.

Der Strom zum Starter kann durch verschiedene Lösungen begrenzt werden, die Gegenstand einzelner Ausführungsformen der Erfindung sowie beispielhafter alternativer Ausführungsformen sind, und im Folgenden unter Hinweis auf detaillierte Zeichnungen beschrieben werden.

Eine beispielhaft angegebene bekannte Lösung sieht das Ein-/Abschalten der Bordnetzspannung zum Starter nach Art einer PWM (pulse width modulation - Pulsbreitenmodulation) mit einer fest vorgegebenen Frequenz (vorgegebenem Taktrahmen) vor.

Erfindungsgemäß wird dem Starter ein Widerstand vorgeschaltet. Weiterhin wird erfindungsgemäß die Strombegrenzung zeitlich begrenzt, um in jedem Falle ein sicheres Starten des Motors erreichen zu können.

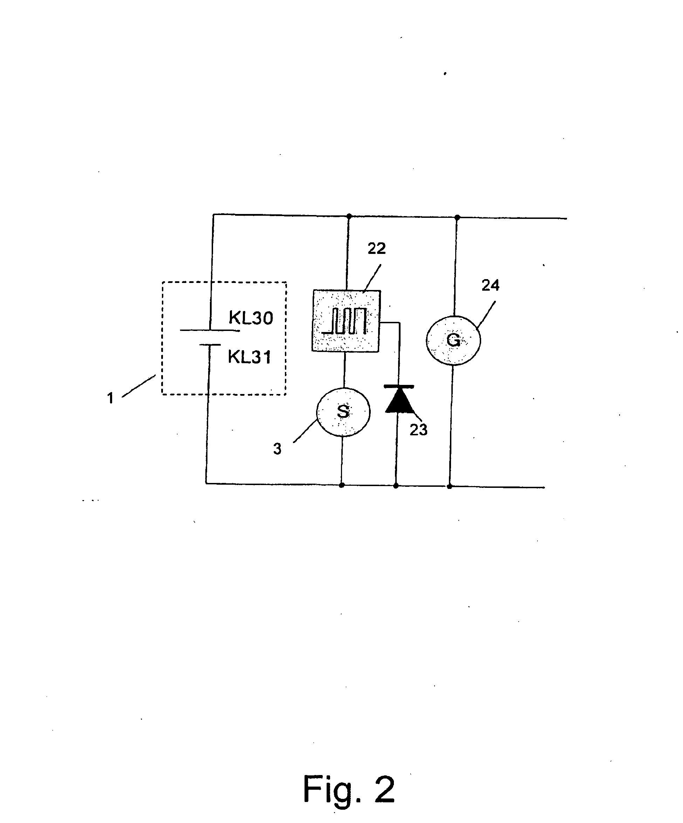

Fig. 2 ist eine schematische Darstellung einer beispielhaften Ausführungsform eines Kraftfahrzeug-Bordnetzes, bei der die Begrenzung des Stroms zum Starter 3 mit Hilfe eines Vorschaltgeräts 22 über eine PWM erfolgt. Das Vorschaltgerät 22 ermöglicht eine Steuerung der (zeitlich gemittelten) Stromaufnahme des Starters über eine Pulsbreitenmodulation (PWM). Das Vorschaltgerät 22 ist an Klemme 30 (KL 30) der Batterie 1 angeschlossen und befindet sich somit im Strompfad zwischen der Batterie und dem Starter 3. In einer zu Batterie und Starter parallelen Masche befindet sich der Generator 24 (Lichtmaschine). Beim Ansteuern des Starters 3 mit PWM durch das Vorschaltgerät 22 werden Induktionsspannungen induziert. Zum Schutz vor einer Überspannung durch die Induktion wird eine Freilaufdiode 23 verwendet. Die Freilaufdiode 23 ist eine Halbleiterdiode, die derart parallel zum Starter 3 gegen Masse (KL 31) geschaltet wird, dass sie von der Speisespannung in Sperrrichtung beansprucht wird. Dadurch wird die induktive Spannungsspitze auf die Durchlassspannung der Diode (bei Silizium etwa 0,6 V) begrenzt. Für den Anschluss der Freilaufdiode 23 benötigt das Vorschaltgerät 22 außer den Hochstromanschlüssen für Batterie 1 und Starter 3 außerdem einen weiteren Hochstromanschluss für Masse. Des Weiteren werden auch in den Zuleitungsinduktivitäten Spannungen induziert, die vorzugsweise durch Elkos gedämpft werden.

Bei der Pulsbreitenmodulation (PWM) wird die Batteriespannung innerhalb einer fest vorgegebenen, als Taktrahmen bezeichneten Zeitdauer jeweils einmal zu- und wieder abgeschaltet. Dadurch wird auch der Stromfluss zum Starter entsprechend zu- und wieder abgeschaltet. Derjenige Anteil an der Zeitdauer eines Taktrahmens, währenddessen die Batteriespannung zugeschaltet ist, und somit der Strom fließt, wird als Tastverhältnis bezeichnet und vorzugsweise in Prozent angegeben. Ein Tastverhältnis von 50 % bedeutet also, dass der Strom während der Hälfte der Dauer eines Taktrahmens fließt, und während der anderen Hälfte abgeschaltet ist. Ein Tastverhältnis von 25 % bedeutet, dass der Stromfluss nur während eines Viertels der Zeitdauer eines Taktrahmens aktiviert ist. In den restlichen drei Vierteln der Zeitdauer des Taktrahmens fließt kein Strom. In den beiden vorstehenden Beispielen fließt somit im zeitlichen Mittel ein Strom von der Hälfte bzw. eines Viertels desjenigen Stromwertes, der bei kontinuierlicher Zuschaltung der Batteriespannung fließen würde. Eine Vielzahl von Taktrahmen festgelegter Länge folgt aufeinander, wobei die Anzahl der Taktrahmen pro Zeiteinheit auch als Frequenz der PWM bezeichnet wird.

Im einfachsten Falle kann das Tastverhältnis der PWM fest vorgegeben sein. In diesem Falle erfolgt die Ansteuerung vorzugsweise so, dass nach einer vorgegebenen Zeit t, gerechnet ab dem Beginn des Startvorgangs, die PWM beendet wird. Damit steht der volle Startstrom zur Verfügung, um den Motor sicher zu starten, wobei allerdings ein starker Spannungseinbruch der Batterie 1 in Kauf genommen wird.

Gemäß einem modifizierten Beispiel wird das Tastverhältnis innerhalb der Zeit t allmählich vergrößert. Ist dabei die Zuwachsgröße des Tastverhältnisses insbesondere klein gegenüber dem Tastverhältnis selbst, kann man von einer quasikontinuierlichen Vergrößerung des Tastverhältnisses sprechen. Das Tastverhältnis zu Beginn (beim Beginn des Startvorgangs) und am Ende (nach Ablauf der vorgegebenen Zeit t seit dem Beginn des Startvorgangs) ist fest vorgegeben. Die allmähliche Steigerung kann hierbei vorzugsweise mit einer konstanten Steigerungsrate erfolgen. Insbesondere lässt sich diese Ausführungsform derart ausgestalten, dass im letzten Steigerungsschritt, zur Zeit t, ein Tastverhältnis von 100 % erreicht wird, womit der PWM-Strom in einen Dauerstrom übergeht, um den Motor sicher starten zu können. Nach Ablauf der Zeit t wird der Starter 3 somit dauerhaft mit der Batteriespannung gespeist, bis der Startvorgang beendet ist.

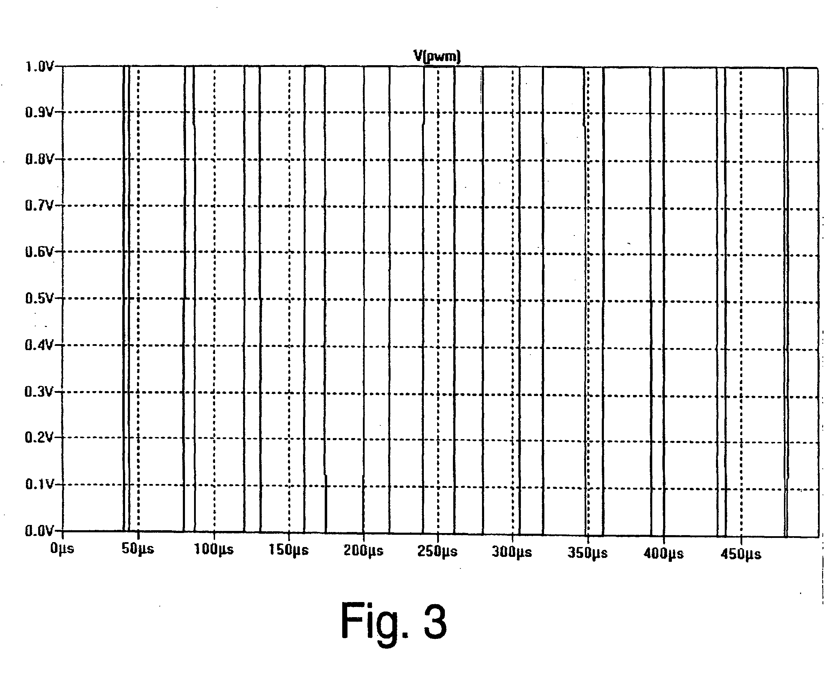

Fig. 3 zeigt beispielhaft die kontinuierliche Vergrößerung des Tastverhältnisses einer PWM. Hierbei beträgt die Länge eines Taktrahmens ca. 43 μs. Das Tastverhältnis liegt zu Beginn des Startvorgangs bei ca. 10 %, und am Ende bei einer Zeit von 450 μs, bei ca. 90 %.

In dem in Fig. 3 gezeigten speziellen Beispiel wird erreicht, dass der Spannungsabfall kontinuierlich größer wird. Zu Beginn des Startvorgangs fließt nur ein sehr geringer mittlerer Strom, welcher das Losreißmoment des Starters nicht überwinden kann. Damit wird der Starter zunächst "vorgespannt", ohne dass er ein Drehmoment entwickelt. Damit wird der harte Schlag für die Batterie beim Beginn des Neustarts reduziert. Durch die allmähliche Steigerung des Tastverhältnisses wird ab einem bestimmten Zeitpunkt des Startvorgangs das Losreißmoment des Starters überwunden.

Gemäß einem weiteren Unteraspekt des PWM-gesteuerten Startvorgangs wird das Tastverhältnis nicht vordefiniert, sondern passt sich der Batteriespannung an.

Auch hier wird dem Starter 3 die Batteriespannung über eine Pulsbreitenmodulation zu- und abgeschaltet. Die Frequenz der PWM (Länge des Taktrahmens) ist fest vorgegeben. Hierbei wird die Batteriespannung in regelmäßigen Abständen (vorzugsweise: mit der Frequenz der PWM) gemessen. Je nach gemessener Batteriespannung wird das Tastverhältnis eingestellt. Gemäß einer bevorzugten Ausführungsform sind jeweils einander zugeordnete Werte von Batteriespannung und Tastverhältnis in einer Tabelle in einem Festwertspeicher abgespeichert. Auf diese Weise kann für die gemessene Batteriespannung auf einfache Weise ein passendes Tastverhältnis eingestellt werden. Da eine solche Zuordnungstabelle nur eine endliche Anzahl von diskreten Werten speichern kann, wird jeweils das Tastverhältnis für diejenige in der Tabelle verzeichnete Spannung ausgelesen, die der gemessenen Batteriespannung am nächsten kommt. Alternativ kann eine Rechenvorschrift hinterlegt werden, mit deren Hilfe aus einer gemessenen Batteriespannung das zugeordnete Tastverhältnis ermittelt wird.

Vorzugsweise wird bei einer hohen vorhandenen Batteriespannung ein höheres Tastverhältnis eingestellt, als bei einer ohnehin schon geringen gemessenen Batteriespannung. Damit wird erreicht, dass der Motor schnell startet, wenn die vorhandene Batteriekapazität aller Voraussicht nach ausreicht, ohne dass ein für die angeschlossenen Verbraucher zu großer Spannungseinbruch erfolgt. Im umgekehrten Fall einer bereits vorab reduzierten Batteriespannung wird ein langsameres Starten in Kauf genommen, um ein Abschalten von Zusatzgeräten zu verhindern.

In einem einfachen Ausführungsbeispiel mit nur zwei vordefinierten Tastverhältnissen kann festgelegt werden, dass ein Tastverhältnis von 50% eingestellt wird, wenn die Batteriespannung annähernd im Bereich der Nennspannung liegt. Liegt die Batteriespannung deutlich unter der Nennspannung, so wird nur ein Tastverhältnis von 35 % eingestellt. Das exemplarische Verfahren ist jedoch weder hinsichtlich der Anzahl der vordefinierten Tastverhältnisse, noch hinsichtlich der angegebenen prozentualen Werte beschränkt. Andere Tastverhältnisse sind gleichermaßen möglich.

Weiterhin alternativ ist es möglich, bei einer niedrigen Batteriespannung ein größeres Tastverhältnis einzustellen, damit der Motor sicher startet. In diesem Fall würde je nach Batteriespannung ein weiteres Absinken unter die Schwelle der Batteriespannung in Kauf genommen. Im Extremfall findet hierbei also wieder das eigentlich unerwünschte harte Einschalten statt.

Die beiden vorstehend genannten Möglichkeiten können auch dahingehend kombiniert werden, dass das vorbestimmte Tastverhältnis zunächst mit sinkender gemessener Batteriespannung absinkt, aber bei sehr niedriger Batteriespannung (unterhalb einer vordefinierten Schwelle) wieder steigt, um die Startchancen des Motors zu verbessern.

Auch im Rahmen einer abhängig von der Batteriespannung geregelten PWM-Ansteuerung kann die Begrenzung der Stromaufnahme auf eine vorgegebene Zeit t, gerechnet vom Beginn des Startvorgangs, beschränkt werden. Hierbei wird der Starter während der fest vorgegebenen Zeit T mit PWM angesteuert, und anschließend wird die Batteriespannung voll zum Starter durchgesteuert.

Gemäß der vorliegenden Erfindung erfolgt die Begrenzung des Stroms zu dem Starter durch einen Leistungswiderstand, der als Vorwiderstand zu dem Starter geschaltet ist. Um, falls erforderlich, ein Starten des Motors ohne Strombegrenzung zu ermöglichen, ist zusätzlich ein Schalter, vorzugsweise ein Halbleiterschalter parallel zum Vorwiderstand vorgesehen, mit dessen Hilfe der Vorwiderstand überbrückt werden kann.

Es ist der Vorteil dieses erfindungsgemäßen Vorgehens gegenüber einer Startstrombegrenzung unter Verwendung von PWM, dass die Störungen im Bordnetz, die durch die PWM verursacht werden, geringer ausfallen. Insbesondere treten kleinere Induktionsspannungen auf, da eine Grundlast durch den Widerstand erhalten bleibt. Somit kann auf eine Freilaufdiode und auf ein Vorschaltgerät mit einem Hochstromanschluss für Masse verzichtet werden.

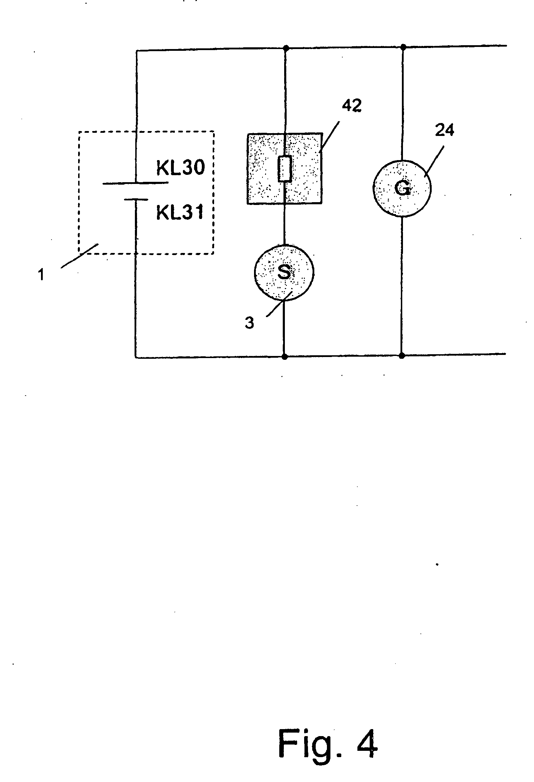

Eine schematische Darstellung eines Bordnetzes mit einem Leistungswiderstand 42 als Vorwiderstand zum Starter 3 ist in Fig. 4 dargestellt. Der Vorwiderstand 42 ist anstelle des PWM-Vorschaltgeräts 22 geschaltet. Auf eine Freilaufdiode kann verzichtet werden. Die restlichen Komponenten in Fig. 4 entsprechen den in Fig. 2 für die PWM-Variante dargestellten Elementen. Ein Halbleiterschalter zum Überbrücken des Vorwiderstands 42 ist in der vereinfachten schematischen Darstellung von Fig. 4 nicht angegeben.

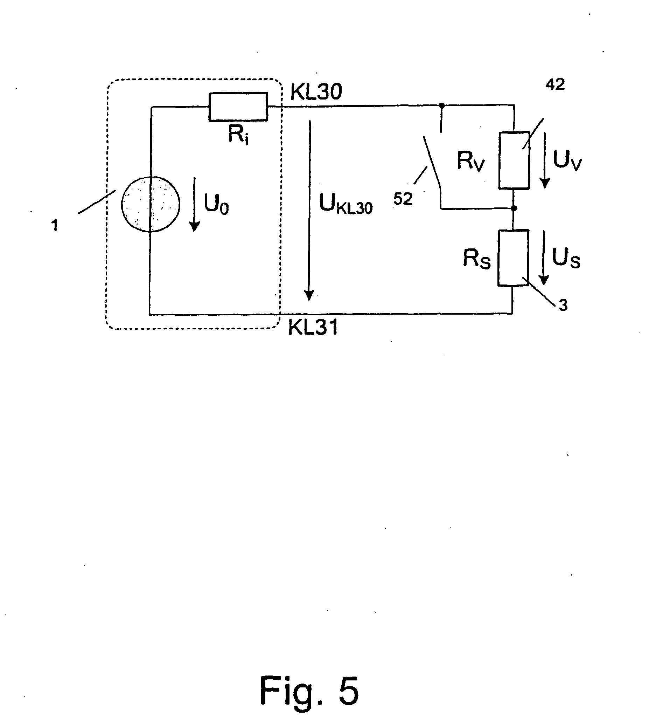

Eine detailliertere Darstellung eines Stromkreises, umfassend die Batterie 1, den Starter 3, den Vorwiderstand 42 und den Halbleiterschalter 52 ist in Fig. 5 angegeben. Fig. 5 zeigt weiterhin in allgemeiner symbolischer Form die Widerstandswerte R der einzelnen Schaltelemente, sowie die entsprechenden Spannungsabfälle U.

Der Halbleiterschalter 52 dient grundsätzlich dazu, den Vorwiderstand 42 überbrücken zu können, um einen unbegrenzten Starterstrom zu ermöglichen. Damit kann erreicht werden, dass, wenn erforderlich, die volle Starterleistung zur Verfügung steht, um den Motor sicher starten zu können. Für die Ansteuerung des Halbleiterschalters 52 sind verschiedene Möglichkeiten denkbar.

Im einfachsten Fall wird die Batteriespannung für eine fest vorgegebene Zeit t über den Vorwiderstand 42 an den Starter 3 geschaltet. Nach Ablauf der Zeit t (gerechnet vom Beginn des Startvorgangs) wird der Halbleiterschalter 52 eingeschaltet. Dadurch wird der Vorwiderstand 42 überbrückt und der Starter 3 direkt mit der Batteriespannung gespeist. Es tritt nur ein zusätzlicher Schaltvorgang auf, nämlich beim Überbrücken des Vorwiderstands 42 mit dem Halbleiterschalter 52 zum Zeitpunkt t. Es entstehen hierdurch so gut wie keine EMV-Störungen.

Alternativ kann die Überbrückung des Vorwiderstands 42 mit dem Halbleiterschalter 52 in Abhängigkeit von einer gemessenen Batteriespannung $U_{KL30}$ geregelt werden. Hierzu wird die Batteriespannung regelmäßig, vorzugsweise mit einer vorgegebenen Frequenz, gemessen. Die gemessene Batteriespannung wird jeweils mit einem feststehenden Sollwert verglichen. Liegt die Batteriespannung über dem Sollwert, wird der Halbleiterschalter 52 eingeschaltet und der Vorwiderstand 42 überbrückt.

Ähnlich wie weiter oben für die batteriespannungsabhängige PWM-Variante ausgeführt, kann der Halbleiterschalter 52 weiterhin so angesteuert werden, dass der Leistungswiderstand 42 bei einer Batteriespannung unterhalb eines vorbestimmten Sollwerts eingeschaltet wird. Damit soll erreicht werden, dass der Motor auch bei sehr niedrigen Batteriespannungen im Notfall gestartet werden kann.

Vorzugsweise können die vorstehend beschriebenen Ausführungsformen dahingehend kombiniert werden, dass der Halbleiterschalter geschlossen wird, wenn die gemessene Batteriespannung entweder höher ist als ein erster Sollwert oder niedriger ist als ein zweiter Sollwert. Hierbei ist der erste Sollwert deutlich höher anzusetzen als der zweite Sollwert.

Ist die gemessene Batteriespannung höher als der erste Sollwert, so ist nicht zu erwarten, dass die Batteriespannung durch einen Startvorgang mit voller Leistung bis unterhalb einer Schwelle absinkt, die für angeschlossene Zusatzgeräte schädlich werden kann bzw. zu deren Abschalten führt. Deshalb kann hier problemlos die volle Starterleistung eingesetzt werden, um so schnell wie möglich den Motor zu starten. Ist die Batteriespannung unterhalb des zweiten Schwellwertes, so muss ein Absinken der Batteriespannung unterhalb ein für bestimmte Zusatzgeräte noch akzeptables Niveau in Kauf genommen werden, um ein Starten des Motors überhaupt zu ermöglichen.

Gemäß einer weiteren bevorzugten Ausführungsform der vorliegenden Erfindung erfolgt das Einschalten des Halbleiterschalters 52 dahingehend adaptiv, dass ein voraussichtlich entstehender Spannungseinbruch der Batterie beim Überbrücken des Vorwiderstands zum jeweiligen Zeitpunkt nicht zu groß wird. Dazu werden bestimmte Parameter während des Startvorgangs, die auf den aktuellen Zustand der Batterie 1 schließen lassen, in Echtzeit ausgewertet, und anhand der Auswertung entschieden, ob der Halbleiterschalter 52 eingeschaltet und der Vorwiderstand 42 überbrückt wird. Der Batteriezustand hängt stark von Temperatur, Alter und Kapazität der Batterie sowie dem Lastenmoment am Starter ab. Durch eine Auswertung es aktuellen Zustandes in Echtzeit wird ermittelt, wie lange der Vorwiderstand 42 zwischen Batterie 1 und Starter 3 geschaltet sein muss, ohne dass das anschließende Überbrücken des Vorwiderstands 42 mit dem Halbleiterschalter 52 zu einem signifikanten Spannungseinbruch an der Batterie führt. Eine solche Ausführungsform läuft ebenfalls darauf hinaus, dass der Vorwiderstand zunächst für eine Zeit t zur Strombegrenzung eingesetzt wird, und anschließend überbrückt wird, um ein sicheres Starten zu ermöglichen. Jedoch wird bei der adaptiven Ansteuerung die Zeit nicht fest vorgegeben, sondern es wird je nach Zustand der Batterie und dem aktuell gegebenen Laststrom entsprechend reagiert. Eine solche Ansteuerungsvariante ermöglicht es, einerseits den Vorwiderstand 42 möglichst kurzzeitig zu aktivieren, um schnell starten zu können, und andererseits dennoch einen übermäßigen Spannungseinbruch zu vermeiden.

Ein Ausführungsbeispiel für eine adaptive Ansteuerung des Halbleiterschalters 52 wird im Folgenden unter Bezug auf Fig. 5 näher beschrieben.

Fig. 5 zeigt die Serienschaltung von Batterie 1, Vorwiderstand 42 und Starter 3 während des Startvorgangs. Die Batterie 1 ist dargestellt als Spannungsquelle $U_o$ mit Innenwiderstand $R_i$ und der Starter 3 mit seinem Ersatzwiderstand $R_s$. Während des Startvorgangs werden die Klemmenspannung $U_{KL30}$ der Batterie 1 sowie die Spannung $U_s$ am Starter 3 zyklisch ausgewertet. Damit lassen sich der Innenwiderstand der Batterie $R_i$ und der Widerstand des Starters $R_s$ bestimmen, ohne dass diese einer direkten Messung zugänglich sind.

$$R_i = \frac{U_{Ri}}{I} = \frac{U_0 - U_{KL30}}{I} \qquad (1)$$

$$R_s = \frac{U_s}{I} \qquad (2)$$

Die in der Berechnungsformel (1) auftretende Leerlaufspannung $U_0$ der Batterie kann in sehr guter Nährung als gleich der Klemmenspannung $U_{KL30}$ vor Beginn des Startvorgangs angenommen und somit als bekannt vorausgesetzt werden. Der Strom durch die Batterie 1 kann nämlich vor dem Startvorgang als hinreichend klein betrachtet werden, so dass der Spannungsabfall am Innenwiderstand der Batterie 1 vernachlässigt werden kann. Beim eigentlichen Startvorgang fließt hingegen ein derart hoher Strom, dass trotz des kleinen Innenwiderstandes ein nicht unwesentlicher Potentialunterschied zwischen $U_o$ und $U_{KL30}$ besteht. Alternativ kann für eine näherungsweise Berechnung $U_o$ als die Nennspannung der Batterie angesehen werden.

Der Strom durch den Starter 3 kann im Prinzip aus dem Vorwiderstand $R_v$ und dessen Spannungsabfall $U_v$ berechnet werden. Dies ist jedoch nicht erforderlich, da sich der Wert des Stroms im weiteren Verlauf der Berechnungen herauskürzt.

Mit den ermittelten Widerstandswerten $R_i$ und $R_s$ lässt sich der Spannungsabfall $U_{KL30}$ neu an $R_s$, wenn $R_v$ kurz geschlossen wird, berechnen.

$$U_{KL30neu} = U_0 \cdot \frac{R_s}{R_i + R_s} \qquad (3)$$

Wie man sieht, beruht die Vorhersage der Batteriespannung bei Überbrückung des Vorwiderstands auf einer Auswertung der aktuellen Widerstandswerte. Da diese gemäß (1) und (2) mit den gemessenen Spannungswerten $U_s$ und $U_{KL30}$ verknüpft sind, ist ihre Kenntnis jedoch nicht unmittelbar erforderlich:

$$U_{KL30neu} = U_0 \cdot \frac{\dfrac{U_s}{I}}{\dfrac{U_0 - U_{KL30}}{I} + \dfrac{U_s}{I}} \qquad (4)$$

$$U_{KL30neu} = \frac{U_0 \cdot U_s}{U_0 - U_{KL30} + U_s} \qquad (5)$$

Somit kann die zu erwartende Klemmenspannung der Batterie $U_{KL30neu}$ aus den gemessenen Werten der Klemmenspannung $U_{KL30}$ sowie der Spannung am Starter $U_s$ berechnet werden. Sobald der berechnete Wert $U_{KL30neu}$ als ausreichend hoch berechnet wurde, wird ein Signal zur Ansteuerung des Schalters 52 ausgegeben, um den Vorwiderstand 42 zu überbrücken. Es wird verhindert, dass beim Überbrücken des Vorwiderstandes 42 ein zu großer Spannungseinbruch verursacht wird. Andererseits wird durch das rechtzeitige Überbrücken des Vorwiderstands 42 ein zu langer Startvorgang verhindert.

Ein beispielhafter Schwellwert für die zu erwartende Batteriespannung $U_{KL30neu}$, oberhalb dessen der Halbleiterschalter 52 aktiviert werden kann, sind 7V. 7V stellen für viele Zusatzgeräte wie Autoradio oder Navigationsgerät eine Spannungsuntergrenze dar, die die Zusatzgeräte gerade noch aushalten. Solche Zusatzgeräte sind derart ausgelegt, dass sie z.B. durch den Einsatz von Spannungswandlern, Spannungen bis herunter zu 7V noch aushalten können. Der angegebene Wert für die Untergrenze der Batteriespannung ist jedoch lediglich beispielhaft, und die vorliegende Erfindung ist nicht auf diesen Wert beschränkt. Eine Vielzahl anderer Spannungswerte ist gleichfalls denkbar, insbesondere für andere Batterienennspannungen als 12V.

Die vorstehend unter Bezug auf Fig. 5 beschriebene Ausführungsform der Erfindung hat ebenso wie die feste Zeitbegrenzung der Aktivierung des Vorwiderstands den Vorteil, dass nur minimale EMV-Störungen erzeugt werden, da es nur einen zusätzlichen Schaltvorgang beim Überbrücken des Vorwiderstandes 42 gibt. Zusätzlich kann aber der Startvorgang dadurch beschleunigt werden, dass der Vorwiderstand nur so lange eingeschaltet bleibt, wie unbedingt erforderlich, um das einwandfreie Funktionieren der an das Kraftfahrzeug-Bordnetz angeschlossenen Zusatzgeräte zu garantieren.

Die erfindungsgemäße adaptive Bestimmung des Zeitpunktes für ein Überbrücken des Vorwiderstands 42 kann auch mit der Idee der festen Zeitbegrenzung dahingehend kombiniert werden, dass der Vorwiderstand 42 überbrückt wird, sobald die zu erwartende Batteriespannung nach dem Überbrücken hinreichend groß (über dem Schwellwert) ist, spätestens aber nach einer vorbestimmten, mit einem Timer gemessenen Zeit ab dem Beginn des Startvorgangs. Damit wird erreicht, dass der Motor sicher gestartet werden kann, auch wenn die Betriebsbedingungen des Bordnetzes einen Spannungseinbruch nicht verhindern können.

Da die Berechnungsvorschrift (5) nur von den in Echtzeit gemessenen Parametern $U_s$ und $U_{KL30}$ (sowie $U_0$, angenommen als die gemessene Klemmenspannung $U_{KL30}$ vor Beginn des Startvorgangs) abhängt, ist dieses Verfahren ohne Parameteranpassung auf beliebige Fahrzeuge, mit unterschiedlichen Batterien und unterschiedlichen Startern mit verschiedenen Anlassdrehmomenten anwendbar. Auf die Veränderung eines Systems (verursacht durch Temperatur, Ladezustand etc.) wird immer selbständig so reagiert, dass der Vorwiderstand 42 nur für die minimal mögliche Zeit eingeschaltet bleibt. Dies bedeutet, dass der Startvorgang so rasch wie möglich erfolgen kann, ohne dass Komforteinbußen auftreten.

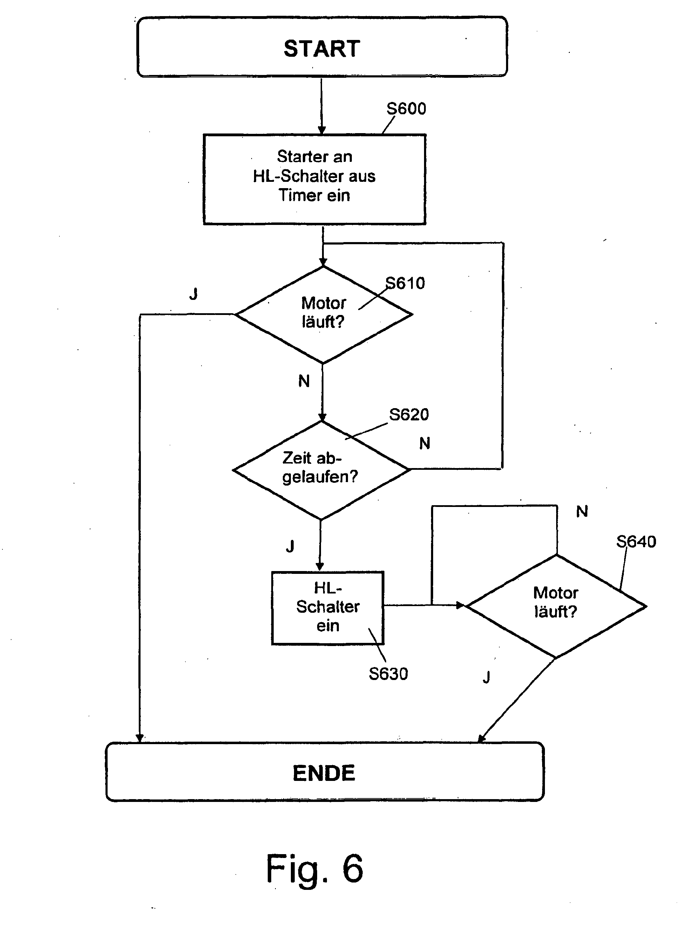

Im Folgenden werden beispielhaft Abläufe beim Starten eines Kraftfahrzeugmotors mit Hilfe eines Kraftfahrzeug-Bordnetzes unter Bezug auf die Flussdiagramme von Fig. 6, Fig. 7 und Fig. 8 beschrieben. Erfindungsgemäß gehen die folgenden beispielhaften Verfahrensabläufe von einem Kraftfahrzeug-Bordnetz mit einem Vorwiderstand 42 aus, der mit Hilfe eines Halbleiterschalters 52 überbrückt werden kann. Entsprechend der oben beschriebenen weiteren Ausführungsformen ergibt sich, dass die vorliegende Erfindung nicht auf die nachfolgenden Verfahrensbeispiele beschränkt ist. Vielmehr ist eine Vielzahl weiterer analoger Beispiele für Flussdiagramme zu Verfahrensabläufen denkbar.

Fig. 6 zeigt ein Beispiel, bei dem eine anfängliche Strombegrenzung während des Startvorgangs nach einer vorab festgelegten Zeit t durch Einschalten des Halbleiterschalters 52 beendet wird, um den Motor mit der vollen Starterleistung starten zu können. Hierzu wird zunächst beim Beginn des Startvorgangs, im Schritt S600, der Halbleiterschalter 52 als nichtleitend angesteuert. Damit wird also zunächst ein übermäßiger Batteriespannungseinbruch verhindert. Während des Startvorgangs wird laufend überwacht, ob der Motor angesprungen ist (S610). Dies kann z.B. elektrisch leicht dadurch detektiert werden, dass bei angesprungenem Motor der Generator 24 beginnt, elektrische Leistung abzugeben.

Sobald festgestellt wird, dass der Motor läuft (S610: J) wird der Startvorgang beendet. Wenn der Motor noch nicht angesprungen ist (S610: N), wird im Schritt S620 geprüft, ob eine vorbestimmte Zeitdauer t seit dem Beginn des Startvorgangs abgelaufen ist. Im einfachsten Fall wird die Zeit t dadurch gemessen, dass beim Beginn des Startvorgangs, im Schritt S600 ein Timer eingeschaltet wird.

Solange die vorbestimmte Zeitdauer t noch nicht abgelaufen ist (S620: N) schreitet das Verfahren zurück zum Schritt S610, und die Überprüfung, ob der Motor angesprungen ist, oder die vorbestimmte Zeit abgelaufen ist, wird zyklisch wiederholt. Sobald die vorbestimmte Zeit abgelaufen ist, bevor der Motor läuft (S620: J) wird im Schritt S630 der Halbleiterschalter eingeschaltet. Somit wird der Vorwiderstand überbrückt, und es steht jetzt die volle Starterleistung zur Verfügung. Der Starter wird ohne Strombegrenzung angesteuert, solange der Motor noch nicht zum Laufen gekommen ist (S640: N). Der Startvorgang endet, wenn der Motor angesprungen ist (S640: J).

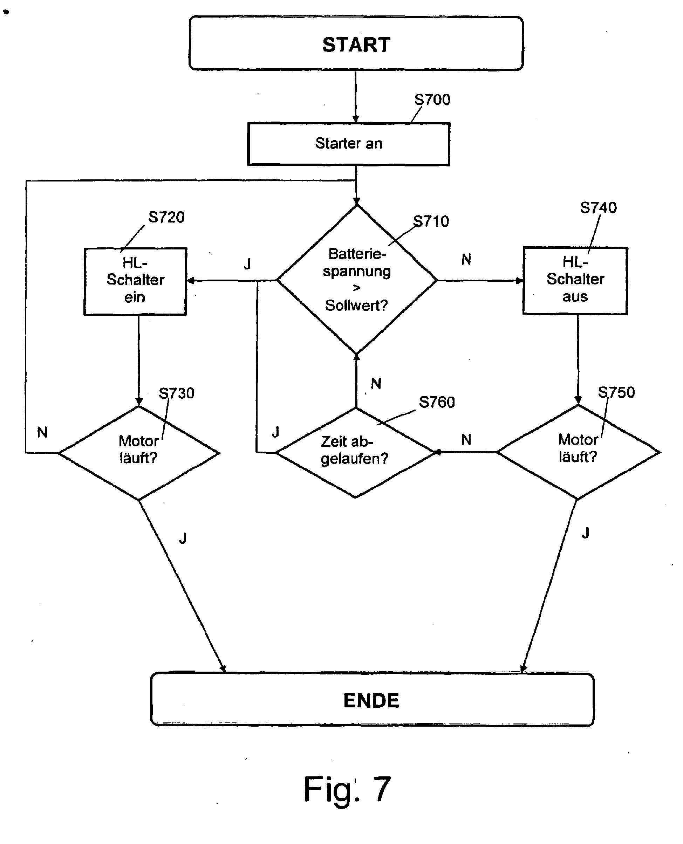

Fig. 7 ist ein Flussdiagramm für ein erfindungsgemäßes Startverfahren, bei dem ebenfalls wie in Fig. 6 die Strombegrenzung des Starters zeitlich beschränkt ist. Zusätzlich wird im Beispiel der Fig. 7 jedoch überprüft, ob die Batteriespannung einen vorgegebenen Sollwert überschreitet. Falls die Batteriespannung größer ist als der Sollwert, so wird die Strombegrenzung bereits vor Ablauf der vorbestimmten Zeit t beendet oder es wird von vornherein ohne Strombegrenzung gestartet.

Der Startvorgang beginnt mit der Aktivierung des Starters im Schritt S700. Im folgenden Schritt S710 wird überprüft, ob eine gemessene Batteriespannung größer ist als ein vorbestimmter Sollwert. Ist dies der Fall (S710: J), so wird/bleibt der Halbleiterschalter im Schritt S720 eingeschaltet. Der Vorwiderstand wird somit überbrückt, und es wird mit voller Leistung gestartet. Im nachfolgenden Schritt S730 wird überprüft, ob der Motor zum Laufen gekommen ist. Sobald der Motor zum Laufen gekommen ist (S730: J) endet der Startvorgang. Solange der Motor noch nicht gestartet ist (S730: N) schreitet die Verarbeitung zum Schritt S710 zurück. Falls die Batteriespannung den Sollwert nicht überschreitet (S710: N), wird/bleibt der Halbleiterschalter ausgeschaltet (S740). Im folgenden Schritt S750 wird überprüft, ob der Motor angesprungen ist. Falls der Motor läuft (S750: J), endet der Startvorgang. Solange der Motor noch nicht läuft (S750: N) wird weiterhin überprüft, ob eine vorbestimmte Zeit seit dem Beginn des Startvorgangs abgelaufen ist (S760). Ist die Zeit abgelaufen (S760: J), so schreitet das Verfahren zum Schritt S720 fort, und der Halbleiterschalter wird eingeschaltet. Falls die vorbestimmte Zeit noch nicht abgelaufen ist (S760: N) geht der Verfahrensablauf zurück zum Schritt S710, in welchem die Batteriespannung mit dem Sollwert verglichen wird.

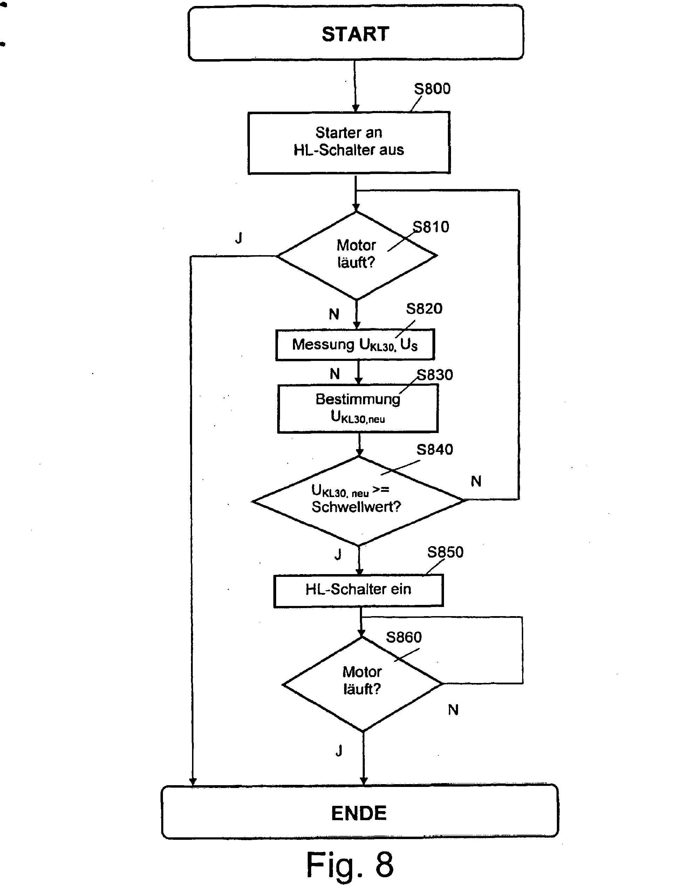

Das folgende Flussdiagramm von Fig. 8 stellt eine beispielhafte Ausführungsform einer erfindungsgemäßen adaptiven Festlegung des Zeitpunkts für ein Überbrücken des Vorwiderstands 42 dar, der auf einer Auswertung gemessener Spannungsgrößen im Kraftfahrzeug-Bordnetz beruht. Der Startvorgang beginnt mit dem Aktivieren des Starters bei eingeschaltetem Vorwiderstand 42, also ausgeschaltetem Halbleiterschalter 52 (S800). Im folgenden Schritt (S810) wird überprüft, ob der Motor zum Laufen gekommen ist. Falls der Motor läuft (S810: J) endet der Startvorgang. Solange der Motor noch nicht zum Laufen gekommen ist (S810: N) erfolgt während des Startvorgangs eine Messung der aktuellen Klemmenspannung $U_{KL30}$ und des Spannungsabfalls am Starter $U_s$ (S820). Im nachfolgenden Schritt S830 wird der zu erwartende Wert für die Batteriespannung beim angenommenen Überbrücken des Vorwiderstandes 42 zu dem aktuellen Zeitpunkt ermittelt. Dies geschieht entsprechend dem weiter oben unter Bezug auf Fig. 5 beschriebenen Verfahren, siehe insbesondere Formel (5). Im Folgeschritt S840 wird bestimmt, ob die so ermittelte zu erwartende Spannung $U_{KL30neu}$ nicht kleiner ist als ein vorbestimmter Schwellwert (Sollwert). Ist dies der Fall (S840: J), wird im Folgeschritt S850 der Halbleiterschalter eingeschaltet und der Vorwiderstand überbrückt. Der Starter 3 wird nun mit dem maximal möglichen Starterstrom angesteuert, bis der Motor läuft (S860: J). Der Starter bleibt mit dem maximalen Starterstrom aktiviert, solange der Motor noch nicht angesprungen ist (S860: N) (oder der Startvorgang von Hand unterbrochen wird). Wenn die Bestimmung im Schritt S840 ergibt, dass der zu erwartende Klemmenspannungswert $U_{KL30neu}$ unter dem vorbestimmten Schwellwert liegt (S840: N), so schreitet der Verfahrensfluss zurück zum Schritt S810 und die folgenden Schritte werden zyklisch wiederholt.

Es sei nochmals betont, dass die vorliegende Erfindung, wie in den beigefügten Patentansprüchen definiert, nicht auf die oben detailliert beschriebenen Ausführungsbeispiele beschränkt ist. Insbesondere können einzelne Merkmale bestimmter Ausführungsbeispiele kombiniert werden, solange dies im Rahmen des fachüblichen Handels widerspruchsfrei möglich ist. So kann z.B. zur Überbrückung des Vorwiderstands anstelle eines Halbleiterschalters 52 auch ein anderer geeigneter Schalter verwendet werden, welcher sich entsprechend elektronisch ansteuern lässt.

Zusammenfassend, betrifft die vorliegende Erfindung ein Kraftfahrzeug-Bordnetz und ein Startverfahren für ein Kraftfahrzeug, bei dem ein übermäßiger Spannungseinbruch der Batterie beim Startvorgang dadurch verhindert wird, dass die Stromaufnahme des Anlassers mit einem überbrückbaren Vorwiderstand zeitlich beschränkt begrenzt wird. Die Zeitbeschränkung hängt von in Echtzeit bestimmten und ausgewerteten Parametern ab.

## Patentansprüche

1. Kraftfahrzeug-Bordnetz, umfassend
eine Batterie (1) und einen Verbraucher (3) elektrischer Energie,
einen als Vorwiderstand (42) zu dem Verbraucher (3) geschalteten Leistungswiderstand zum Begrenzen des Stroms zum Verbraucher (3), so dass ein Spannungseinbruch der Batterie (1) im eingeschalteten Zustand des Verbrauchers (3) begrenzt wird,
einen Schalter (52) zum Überbrücken des Vorwiderstands (42), um das Begrenzen des Stroms zum Verbraucher (3) zu beenden, und
eine Steuereinheit zum Ansteuern des Schalters (52) zum Überbrücken des Vorwiderstands (42),
wobei die Steuereinheit den Schalter (52) adaptiv in Abhängigkeit vom aktuellen Zustand der Batterie (1) zum Überbrücken des Vorwiderstands (42) ansteuert,
**dadurch gekennzeichnet, dass** die Steuereinheit
Betriebsparameter des Kraftfahrzeug-Bordnetzes auswertet, um einen zu erwartenden Wert ($U_{KL30,neu}$) der Batteriespannung beim Überbrücken des Vorwiderstands (42) zu bestimmen, und
den Schalter (52) adaptiv in Abhängigkeit von dem zu erwartenden Wert ($U_{KL30.neu}$) der Batteriespannung zum Überbrücken des Vorwiderstands (42) ansteuert.

2. Kraftfahrzeug-Bordnetz nach Anspruch 1, wobei die Steuereinheit den aktuellen Zustand der Batterie (1) in Abhängigkeit von mindestens einem bei eingeschaltetem Verbraucher (3) gemessenen Betriebsparameter des Kraftfahrzeug-Bordnetzes beurteilt.

3. Kraftfahrzeug-Bordnetz nach Anspruch 2,
weiterhin umfassend eine Einrichtung zum Messen der Batteriespannung ($U_{KL30}$) als Betriebsparameter des Kraftfahrzeug-Bordnetzes,
wobei die Steuereinheit den Schalter (52) in Abhängigkeit von der gemessenen Batteriespannung ($U_{KL30}$) zum Überbrücken des Vorwiderstand (42) ansteuert.

4. Kraftfahrzeug-Bordnetz nach einem der Ansprüche 1 bis 3, wobei der Vorwiderstand (42) dann überbrückt wird, wenn der zu erwartende Wert ($U_{KL30, neu}$) über einem bestimmten Sollwert liegt.

5. Kraftfahrzeug-Bordnetz nach einem der Ansprüche 1 bis 4, weiterhin umfassend Einrichtungen zum Messen der Batteriespannung ($U_{KL30}$) und der Spannung ($U_S$) am Verbraucher (3),
wobei die Steuereinheit die gemessene Batteriespannung ($U_{KL30}$) und die Spannung ($U_S$) am Verbraucher (3) auswertet, um den zu erwartenden Wert ($U_{KL30,neu}$) für die Batteriespannung beim Überbrücken des Vorwiderstands (42) zu bestimmen.

6. Kraftfahrzeug-Bordnetz nach einem der Ansprüche 1 bis 5, wobei der Verbraucher (3) ein Starter für das Starten eines Kraftfahrzeugmotors ist.

7. Verfahren zum Steuern der Batteriespannung in einem Kraftfahrzeug-Bordnetz, das eine Batterie (1) und einen Verbraucher (3) elektrischer Energie umfasst, wobei das Verfahren die Schritte umfasst
Begrenzen (S740, S800) des Stroms zum Verbraucher (3) durch einen als Vorwiderstand (42) zu dem Verbraucher (3) geschalteten Leistungswiderstand, um einen Spannungseinbruch der Batterie (1) im eingeschalteten Zustand des Verbrauchers (S600, S700) zu begrenzen, und
Überbrücken (S720, S850) des Vorwiderstands (42), um das Begrenzen des Stroms zum Verbraucher (3) zu beenden, wobei
der Schritt des Überbrückens (S720, S850) adaptiv in Abhängigkeit vom aktuellen Zustand der Batterie (1) erfolgt, **gekennzeichnet durch** den Schritt
Auswerten (S830) von Betriebsparametern des Kraftfahrzeug-Bordnetzes, um einen zu erwartenden Wert ($U_{KL30,neu}$) der Batteriespannung beim Überbrücken des Vorwiderstands (42) zu bestimmen, wobei
der Vorwiderstand (42) adaptiv in Abhängigkeit von dem zu erwartenden Wert ($U_{KL30,neu}$) der Batteriespannung überbrückt wird.

8. Verfahren nach Anspruch 7, wobei der aktuelle Zustand der Batterie (1) in Abhängigkeit von mindestens einem bei eingeschaltetem Verbraucher (3) gemessenen Betriebsparameter des Kraftfahrzeug-Bordnetzes beurteilt.

9. Verfahren nach Anspruch 8,
weiterhin umfassend den Schritt des Messens (S820) der Batteriespannung ($U_{KL30}$) als Betriebsparameter des Kraftfahrzeug-Bordnetzes,
wobei der Vorwiderstand (42) in Abhängigkeit von der gemessenen Batteriespannung ($U_{KL30}$) überbrückt wird.

10. Verfahren nach einem der Ansprüche 7 bis 9, wobei der Vorwiderstand (42) dann überbrückt wird, wenn der zu erwartende Wert ($U_{KL, neu}$) über einem bestimmten Sollwert liegt.

11. Verfahren nach einem der Ansprüche 7 bis 10, weiterhin umfassend die Schritte
Messen (S820) der Batteriespannung ($U_{KL30}$) und der Spannung ($U_S$) am Verbraucher (3), und
Auswerten (S830) der gemessenen Batteriespannung ($U_{KL30}$) und Spannung ($U_S$) am Verbraucher (3), um den zu erwartenden Wert ($U_{KL30,neu}$) für die Batteriespannung beim Überbrücken des Vorwiderstands (42) zu bestimmen.

**Claims**

1. Motor vehicle on-board power supply, comprising a battery (1) and a consumer (3) of electrical energy, a power resistor connected to the consumer (3) as a series resistor (42) to limit the current to the consumer (3), such that a voltage drop of the battery (1) is limited when the consumer (3) is switched on, a switch (52) to bypass the series resistor (42) in order to end the limiting of the current to the consumer (3), and a control unit to control the switch (52) to bypass the series resistor (42), the control unit controlling the switch (52) adaptively on the basis of the current state of the battery (1) to bypass the series resistor (42), **characterised in that** the control unit evaluates operating parameters of the motor vehicle on-board power supply in order to determine a value ($U_{KL30,neu}$) to be expected of the battery voltage when bypassing the series resistor (42), and controls the switch (52) adaptively on the basis of the value ($U_{KL30,neu}$) to be expected of the battery voltage to bypass the series resistor (42).

2. Motor vehicle on-board power supply according to claim 1, wherein the control unit assesses the current state of the battery (1) on the basis of at least one operating parameter of the motor vehicle on-board power supply, which parameter is measured when the consumer (3) is switched on.

3. Motor vehicle on-board power supply according to claim 2, further comprising a means for measuring the battery voltage ($U_{KL30}$) as an operating parameter of the motor vehicle on-board power supply, wherein the control unit controls the switch (52) on the basis of the measured battery voltage ($U_{KL30}$) to bypass the series resistor (42).

4. Motor vehicle on-board power supply according to any of claims 1 to 3, wherein the series resistor (42) is bypassed when the value ($U_{KL30,neu}$) to be expected is above a predetermined desired value.

5. Motor vehicle on-board power supply according to any of claims 1 to 4, further comprising means for measuring the battery voltage ($U_{KL30}$) and the voltage ($U_S$) at the consumer (3), wherein the control unit evaluates the measured battery voltage ($U_{KL30}$) and the voltage ($U_S$) at the consumer (3) in order to determine the value ($U_{KL30,neu}$) to be expected for the battery voltage when bypassing the series resistor (42).

6. Motor vehicle on-board power supply according to any of claims 1 to 5, wherein the consumer (3) is a starter for starting a motor vehicle engine.

7. Method for controlling the battery voltage in a motor vehicle on-board power supply which comprises a battery (1) and a consumer (3) of electrical energy, the method comprising the steps of limiting (S740, S800) the current to the consumer (3) by means of a power resistor connected to the consumer (3) as a series resistor (42) in order to limit a voltage drop of the battery (1) when the consumer (S600, S700) is switched on, and bypassing (S720, S850) the series resistor (42) in order to end the limiting of the current to the consumer (3), the step of bypassing (S720, S850) taking place adaptively on the basis of the current state of the battery (1), **characterised by** the step of evaluating (S830) operating parameters of the motor vehicle on-board power supply in order to determine a value ($U_{KL30,neu}$) to be expected of the battery voltage when bypassing the series resistor (42), the series resistor (42) being bypassed adaptively on the basis of the value ($U_{KL30,neu}$) to be expected of the battery voltage.

8. Method according to claim 7, wherein the current state of the battery (1) is assessed on the basis of at least one operating parameter of the motor vehicle on-board power supply, which parameter is measured when the consumer (3) is switched on.

9. Method according to claim 8, further comprising the step of measuring (S820) the battery voltage ($U_{KL30}$) as an operating parameter of the motor vehicle on-board power supply, wherein the series resistor (42) is bypassed on the basis of the measured battery voltage ($U_{KL30}$).

10. Method according to any of claims 7 to 9, wherein the series resistor (42) is bypassed when the value ($U_{KL,neu}$) to be expected is above a predetermined desired value.

11. Method according to any of claims 7 to 10, further comprising the steps of measuring (S820) the battery voltage ($U_{KL30}$) and the voltage ($U_S$) at the consumer (3), and evaluating (S830) the measured battery voltage ($U_{KL30}$) and voltage ($U_S$) at the consumer (3), in order to determine the value ($U_{KL30,neu}$) to be expected for the battery voltage when bypassing the series resistor (42).

**Revendications**

1. Réseau de bord de véhicule automobile, comprenant
une batterie (1) et une charge (3) consommant de l'énergie électrique,
une résistance de puissance connectée comme résistance en série (42) sur la charge (3) pour limiter le courant de la charge (3) de manière à limiter une chute de tension de la batterie (1) à l'état connecté de la charge (3),
un interrupteur (52) pour ponter la résistance en série (42) de manière à interrompre la limitation du courant de la charge (3), et
une unité de commande de l'interrupteur (52) pour ponter la résistance en série (42),
dans lequel l'unité de commande actionne l'interrupteur (52) de manière adaptative en fonction de l'état actuel de la batterie (1) pour ponter la résistance en série (42),
**caractérisé en ce que** l'unité de commande
évalue des paramètres de fonctionnement du réseau de bord de véhicule automobile pour déterminer une valeur à prévoir ($U_{KL30,neu}$) de la tension de batterie lors du pontage de la résistance en série (42), et commande l'interrupteur (52) de manière adaptive en fonction de la valeur à prévoir ($U_{KL30,neu}$) de la tension de batterie pour ponter la résistance en série (42).

2. Réseau de bord de véhicule automobile selon la revendication 1, dans lequel l'unité de commande évalue l'état actuel de la batterie (1) en fonction d'au moins un paramètre de fonctionnement du réseau de bord de véhicule automobile mesuré avec la charge (3) branchée.

3. Réseau de bord de véhicule automobile selon la revendication 2, comprenant en outre un dispositif de mesure de la tension de batterie ($U_{KL30}$) comme paramètre de fonctionnement du réseau de bord de véhicule automobile, dans lequel l'unité de commande actionne l'interrupteur (52) en fonction de la tension de batterie ($U_{KL30}$) mesurée pour ponter la résistance en série (42).

4. Réseau de bord de véhicule automobile selon l'une des revendications 1 à 3, dans lequel la résistance en série (42) est pontée lorsque la valeur à prévoir ($U_{KL30,neu}$) dépasse une valeur de consigne déterminée.

5. Réseau de bord de véhicule automobile selon l'une des revendications 1 à 4, comprenant en outre des dispositifs de mesure de la tension de batterie ($U_{KL30}$) et de la tension ($U_S$) sur la charge (3), dans lequel l'unité de commande évalue la tension de batterie ($U_{KL30}$) mesurée et la tension ($U_S$) sur la charge (3) pour déterminer la valeur à prévoir ($U_{KL30,neu}$) de la tension de batterie lors du pontage de la résistance en série (42).

6. Réseau de bord de véhicule automobile selon l'une des revendications 1 à 5, dans lequel la charge (3) est un démarreur pour la mise en marche d'un véhicule automobile.

7. Procédé de commande de la tension de batterie dans un réseau de bord de véhicule automobile comportant une batterie (1) et une charge (3) consommant de l'énergie électrique, dans lequel le procédé comprend les étapes de limitation (S740, S800) du courant de la charge (3) par une résistance de puissance connectée comme résistance en série (42) sur la charge (3) pour limiter une chute de tension de la batterie (1) à l'état connecté de la charge (S600, S700), et de pontage (S720, S850) de la résistance en série (42) pour interrompre la limitation du courant de la charge (3), dans lequel l'étape de pontage (S720, S850) s'effectue de manière adaptive en fonction de l'état actuel de la batterie (1), **caractérisé par** l'étape d'évaluation (S830) des paramètres de fonctionnement du réseau de bord de véhicule automobile pour déterminer une valeur à prévoir ($U_{KL30,neu}$) de la tension de batterie lors du pontage de la résistance en série (42), dans lequel la résistance en série (42) est pontée de manière adaptative en fonction de la valeur à prévoir ($U_{KL30,neu}$) de la tension de batterie.

8. Procédé selon la revendication 7, dans lequel l'état actuel de la batterie (1) est déterminé en fonction d'au moins un paramètre de fonctionnement du réseau de bord de véhicule automobile mesuré avec la charge (3) branchée.

9. Procédé selon la revendication 8, comprenant en outre l'étape de mesure (S820) de la tension de batterie ($U_{KL30}$) comme paramètre de fonctionnement du réseau de bord de véhicule automobile, dans lequel la résistance en série (42) est pontée en fonction de la tension de batterie ($U_{KL30}$) mesurée.

10. Procédé selon l'une des revendications 7 à 9, dans lequel la résistance en série (42) est pontée lorsque la valeur à prévoir ($U_{KL,neu}$) dépasse une valeur de consigne déterminée.

11. Procédé selon l'une des revendications 7 à 10, comprenant en outre les étapes de mesure (S820) de la tension de batterie ($U_{KL30}$) et de la tension ($U_S$) sur la charge (3), et d'évaluation (S830) de la tension de batterie ($U_{KL30}$) et de la tension ($U_S$) sur la charge (3) mesurées pour déterminer la valeur à prévoir ($U_{KL30,neu}$) de la tension de batterie lors du pontage de la résistance en série (42).

Fig. 1

KL30

KL31

1

22

24

G

S

23

3

# Fig. 2

EP 2 469 070 B1

V(pwm)

Fig. 3

KL30

KL31

1

42

24

G

S

3

## Fig. 4

# Fig. 5

START

S600

Starter an
HL-Schalter aus
Timer ein

J

Motor
läuft? — S610

N

Zeit abgelaufen? — S620    N

J

HL-
Schalter
ein

S630

N

Motor
läuft? — S640

J

ENDE

Fig. 6

Fig. 7

```
                    ┌─────────────────────────┐
                    │         START           │
                    └─────────────────────────┘
                                 │
                                 │        S800
                    ┌─────────────────────────┐
                    │       Starter an        │
                    │     HL-Schalter aus      │
                    └─────────────────────────┘
                                 │
                                 ▼
              J              ╱   S810   ╲
          ┌──────────────  ╱    Motor    ╲
          │                ╲    läuft?    ╱
          │                 ╲           ╱
          │                      │ N      S820
          │                ┌─────────────────────┐
          │                │  Messung U_KL30, U_S │
          │                └─────────────────────┘
          │                  N │      S830
          │                ┌─────────────────────┐
          │                │    Bestimmung        │
          │                │    U_KL30,neu        │
          │                └─────────────────────┘
          │                      │        S840
          │                ╱               ╲     N
          │               ╱  U_KL30, neu >= ╲ ──────┐
          │               ╲   Schwellwert?  ╱        │
          │                ╲               ╱         │
          │                      │ J        S850     │
          │                ┌─────────────────────┐   │
          │                │    HL-Schalter ein   │   │
          │                └─────────────────────┘   │
          │                      │       S860         │
          │                ╱               ╲          │
          │               ╱     Motor       ╲ ────────┘
          │               ╲     läuft?      ╱    N
          │                ╲               ╱
          │                      │ J
          ▼                      ▼
        ┌─────────────────────────────────────┐
        │                ENDE                  │
        └─────────────────────────────────────┘
```

## Fig. 8

21

S - Starter
G - Generator

130    Stromverteil-
       Punkt                    160

                                              verschiedene
                                              Laststromkreise

110  S          120    R$_{Zu1}$    140    R$_{Zu2}$

          G

                150
                          Batterie

                                    100

# Fig. 9

EP 2 469 070 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1564862 A1

- DE 102009010977